# EUROPEAN PATENT APPLICATION

(11) **EP 4 249 225 A1**
(43) Date of publication of application: **27.09.2023**
(21) Application number: 22163786.1
(22) Date of filing: 23.03.2022
(51) Int. Cl.: B29D 11/00, B33Y 10/00, B33Y 80/00, B29C 64/112

(54) **OPTICAL STRUCTURE AND METHOD FOR PRODUCING AN OPTICAL STRUCTURE**

(71) Applicant: Meta Platforms Technologies, LLC, Menlo Park, CA 94025 (US)
(72) Inventor: PUSKAS, Daniel, 5656 AE Eindhoven (NL)
(74) Representative: Murgitroyd & Company

(57) **Abstract**

The invention relates to a method for producing an optical structure, in particular an optical lens,
wherein the method comprises the following steps:
- in a first step, a base structure is provided;
- in a second step, after the first step, droplets of a printing ink are deposited onto the base structure, wherein the droplets are arranged to form a first layer;
- in a third step, during and/or after the second step, the deposited droplets are at least partially cured by illumination,
characterized in that - in the third step -:
--- the wavelength and/or duration of illumination and/or radiant flux and/or the temperature is chosen and/or adjusted for controlling the shape of one or more further droplets of printing ink that are to be deposited on top of the first layer;
and/or
--- the wavelength and/or duration of illumination and/or radiant flux and/or the temperature is chosen and/or adjusted according to predetermined parameters, wherein the predetermined parameters are determined based on a required and/or desired shape and/or amount of wetting of one or more further droplets of printing ink that are to be deposited on top of the first layer.

## Description

### BACKGROUND

The present invention relates to a method for producing an optical structure, in particular an optical lens. Moreover, the present invention relates to an optical structure.

In recent years, with the rise of rapid prototyping and in particular additive manufacturing, three-dimensional printing techniques making use of various ink materials have started to be employed for producing optical structures, especially optical lenses. As an additive method, printing is more flexible and less wasteful than conventional techniques, thereby providing highly individualized, non-standard, low-waste and low-cost optical structures. As such, printing techniques for optical structures are generally known.

For instance, WO 2020169691 A1 discloses a method for printing a multifocal lens comprising a base lens and at least one segment lens.

It is desirable, e.g., for microscopy or semiconductor production, to create optical structures with very small dimensions, e.g., in the region of microns or even nanometers, with high accuracy. It is desirable to achieve a high customizability with good spatial precision to improve the functionality of printed optical structures further.

### SUMMARY

Hence, it is an object of the present invention to provide a method for producing an optical structure with advantageous optical properties and/or high customizability. It is a further object of the present invention to provide a corresponding optical structure.

According to the present invention, this object is achieved by a method for producing an optical structure, in particular an optical lens,
wherein the method comprises the following steps:
   - in a first step, a base structure is provided;
   - in a second step, after the first step, droplets of a printing ink are deposited onto the base structure, wherein the droplets are arranged to form a first layer;
   - in a third step, during and/or after the second step, the deposited droplets are at least partially cured by illumination,
characterized in that - in the third step -:
   --- the wavelength and/or duration of illumination and/or radiant flux and/or the temperature is chosen and/or adjusted for controlling the shape of one or more further droplets of printing ink that are to be deposited on top of the first layer;
      and/or
   --- the wavelength and/or duration of illumination and/or radiant flux and/or the temperature is chosen and/or adjusted according to predetermined parameters, wherein the predetermined parameters are determined based on a required and/or desired shape and/or amount of wetting of one or more further droplets of printing ink that are to be deposited on top of the first layer.

By means of the present invention, optical structures with advantageous properties may be produced with a high level of customization by means of an ink. According to the present invention, it is advantageously possible to adjust the curing energy of already deposited droplets or layers for controlling the droplet shape of yet to be deposited further droplets after depositing. In particular, it is conceivable that by means of choosing and/or adjusting the wavelength and/or duration of illumination and/or radiant flux and/or temperature of the deposited droplets in the third step according to predetermined parameters, the shape of one or more further droplets of printing ink that are to be deposited on top of the first layer can be controlled. As such, the shape of further droplets that are to be deposited on top of the first layer can be influenced and/or defined by means of the curing process of the droplets of the first layer. It is especially conceivable according to the present invention that the shape of the one or more further droplets (that are to be deposited on top of the first layer) is influenced by the amount of wetting of said one or more further droplets on the first layer. The wettability is amongst others influenced by the pinning energy of the first layer. The less the first layer is pinned, the more the one or more further droplets (that are to be deposited on top of the first layer) will wet, wherein more wetting leads to the one or more further droplets having an increased diameter and/or width and a decreased height. The pinning energy (of the first layer) can be increased by longer exposition to UV light and/or by using a shorter wavelength in the third step. By controlling the amount of pinning energy, the resulting shape of the one or more further droplets (that are to be deposited on top of the first layer) is controllable. Preferably, for the droplets deposited in the second step, the desired curing energy and/or waiting time is calculated according to the preferred cured droplet shape of the one or more further droplets that are deposited on top of the first layer.

According to the present invention, it is preferred that the predetermined parameters at least specify the wavelength and/or duration and/or radiant flux of illumination used in the third step for at least partially curing the deposited droplets and/or the temperature of the deposited droplets after the third step. Said predetermined parameters are preferably predetermined in that they are calculated in dependence of a required and/or desired amount of wetting of one or more further droplets of printing ink that are to be deposited on top of the first layer. The predetermined parameters are preferably calculated before and/or as part of the third step. The wettability of the one or more further droplets (that are deposited on the first layer) is influenced by the viscosity of the one or more further droplets. The viscosity is depending on the temperature of the underlying surface. In particular, the temperature of the deposited one or more further droplets depends on the temperature of the underlying surface, i.e., on the temperature of the first layer and/or base structure, because the further droplets have a low mass and low heat capacity. Therefore, the temperature of the deposited one or more further droplets rapidly changes to the temperature of the underlying surface. The shape of the one or more further droplets also depends on the drop-volume. The drop-volume can be controlled by the printhead that is used for printing/ejecting the one or more further droplets. Also, the surface roughness and/or texture of the first layer has an influence on the wettability of the one or more further droplets. The surface roughness and/or texture of the first layer can be influenced by the way the first layer is being printed. Especially, the waiting time before pinning is an important factor that influences the roughness and/or texture of the first layer. Thereby, by influencing the waiting time before pinning the droplets of the first layer, the shape of the one or more further droplets of printing ink (that are deposited on the first layer) can be controlled.

It is possible that determining, especially calculating, the predetermined parameters based on a required and/or desired wettability of one or more further droplets of printing ink that are to be deposited on top of the first layer is carried out partly or fully computer-implemented.

According to the present invention, it is preferably conceivable that controlling the shape of one or more further droplets of printing ink comprises controlling a height and/or width of the one or more further droplets, deposited on top of the first layer.

According to the present invention, it is conceivable that the base structure is a substrate. Preferably, the base structure is a substrate which is used for producing the optical structure. In particular, the base structure may comprise a base layer printed upon a substrate. This is particularly advantageous as the resulting base structure may be produced such as to comprise a very smooth surface, which is advantageous when creating optical microstructures. Preferably, the base structure comprises glass and/or a polymer, in particular trivex, allyl diglycol carbonate (CR-39), cellulose triacetate (TAC), cyclic olefin copolymer (COC), polyethylene terephthalate (PET), polycarbonate (PC) and/or Polymethyl methacrylate (PMMA), which is also known as acrylic glass or plexiglass. Those materials are well-known and tested materials for optical purposes and therefore particularly suited for the production of the optical structure according to the present invention. Preferably, within the context of the present invention, it is assumed and preferred that the base structure is generally flat and therefore comprises a substantially flat surface area. Of course, the base structure may as well comprise a curved surface. For instance, it is conceivable that the base structure is or comprises a PMMA sheet.

The optical structure is a three-dimensional structure preferably intended to at least partially transmit light. The optical structure is more preferably intended for use in the visible spectrum. Preferably, in order to serve an optical purpose, the optical structure is at least partially optically transparent, in particular at least for in range of wavelengths, such as the visible spectrum.

It is conceivable that the optical structure is a microstructure. In the context of the present invention, the term microstructures is not intended to be limited to structures with sizes in the range of several micrometers, but also covers smaller structures with sizes in the range of several nanometers, i.e., nanostructures.

In particular, the inventive method of producing an optical structure can be understood to be or comprise a method of printing the optical structure on a base structure.

Preferably, in the second step, the droplets are arranged at least partially side by side and/or partly overlapping each other to form the first layer.

It is conceivable that the optical structure is built up from layers of printing ink. It preferred that said layers of ink are obtained through a targeted placement of droplets of printing ink at least partially side by side. The droplets of ink are preferably ejected from one or more nozzles of a printing head, typically in a substantially vertical direction towards the base structure, although ejecting the droplets at an angle is possible as well. Further droplets of layers constituting the following layer are at least partly ejected towards the previously deposited layer, such that the three-dimensional structure is built up layer by layer. Preferably, the three-dimensional printing is a multi-jet printing. Especially, it is conceivable that the optical structure is built up at least from a first layer of printing ink and one or more further droplets of printing ink deposited on the first layer. It is possible that the one or more further droplets, deposited on the first layer form a second layer. It is conceivable that the optical structure is built - in addition to the first and second layer - by means of one or more additional layers deposited on top of the first and/or second layer.

According to a preferred embodiment of the present invention, the third step may be carried out:
- after all droplets of printing ink of the first layer have been deposited, or
- after only some of the droplets of printing ink of the first layer have been deposited, or
- after a single droplet of printing ink of the first layer has been deposited. As such, the second and third steps may be carried out after each other or at least partially overlapping with each other. In particular, parts of the third step may generally be performed at any time in the second step.

In general, curing steps may be performed at any time in the process, e.g. a partial curing may be carried out after finishing the printing of a layer or after depositing one or more droplets of printing ink of a layer. Preferably, a layer is partially cured before a subsequent layer is printed.

Preferably, the ink, especially the printing ink, comprises a translucent or transparent component. More preferably, the printing ink comprises at least one photo-polymerizable component. The at least one photo-polymerizable component is most preferably a monomer that polymerizes upon exposure to radiation, e.g., ultra-violet (UV) light. The deposited droplets are preferably pin cured, i.e., partially cured, after deposition. Preferably, the droplets of printing ink are pin cured after deposition of either the respective droplet or a whole layer or part of a whole layer. During pin curing, the deposited droplet or droplets are only partially cured. Preferably, pin curing involves an exposition to the deposited droplet or droplets to UVA light with a wave length between 315 and 380 nm, particularly UVA LED, resulting in a selective polymerization of the layer. Hence, a semi-polymerized layer body is obtained, whose top surface of the pin cured layer is less polymerized and maintains a more liquid state. This allows for a good ink acceptance in the next printing step, while the underlying part of the layer has a sufficient solid state that immobilizes the total structure. Accordingly, it is conceivable according to an embodiment of the present invention that the droplets of printing ink of the first layer that are deposited in the second step are pin cured after deposition of either the respective droplet or the whole first layer. The pin curing especially occurs in the third step. During pin curing, the deposited droplet or droplets of the first layer are only partially cured. Preferably, pin curing in the third step involves an exposition of the deposited droplet or droplets to UVA light with a wave length between 315 and 380 nm, particularly UVA LED, resulting in a selective polymerization of the first layer. Hence, a semi-polymerized layer body (of the first layer) is obtained, whose top surface is less polymerized and maintains a more liquid state. This allows for a good ink acceptance in the next printing step (i.e., when depositing the one or more further droplets of printing ink) while the underlying part has a sufficient solid state that immobilizes the total structure. It is conceivable that - by means of controlling the polymerization of the droplets of the first layer in the third step, in particular by adjusting the wavelength and/or duration of illumination and/or radiant flux according to predetermined parameters - the wettability of the yet to be deposited further droplets after they are deposited is influenced. Thereby, a desired shape for the yet to be deposited further droplets may be obtained.

According to an embodiment of the present invention, it is conceivable that the parameters of a printing process comprise one, some or all of the following parameters:
- an ambient temperature,
- a temperature of the printing ink,
- a composition of the printing ink,
- a viscosity of the printing ink,
- a droplet size,
- a droplet ejection velocity,
- a droplet density and a printing velocity,
- a temperature of the substrate,
- a temperature of the base structure.

One, some or all of the above parameters may be kept constant or may be varied in the second step. One, some or all of the above parameters may be the same for printing different layers of the optical structure. One, some or all of the above parameters may be changed or varied for printing different layers of the optical structure.

According to an embodiment of the present invention, - in the third step - the wavelength and/or duration of illumination and/or radiant flux is chosen and/or adjusted individually for droplets deposited in the second step or individually for sets of droplets deposited in the second step. It is especially conceivable that for each droplet deposited in the second step, the wavelength and/or duration of illumination and/or radiant flux is chosen and/or adjusted individually. It is possible that for each deposited droplet, the desired curing energy and waiting time is calculated according to the preferred cured droplet shape of the next layer or next layers (i.e., especially of the second layer). Alternatively, it is conceivable that the wavelength and/or duration of illumination and/or radiant flux is chosen and/or adjusted individually for different sets of droplets, wherein the same wavelength and duration of illumination are employed for all droplets of the same set of droplets. The sets of droplets may, e.g., be a number of droplets that are deposited consecutively. For instance, the sets of droplets may each comprise the same amount of droplets, or the sets of droplets may comprise different amounts of droplets. For instant, one set of droplets may comprise 1, 2, 3, 4, 5, 6, 7 ,8, 9, 10 or more droplets.

According to an embodiment of the present invention, the wavelength and/or duration of illumination and/or radiant flux is varied in dependence of a lateral position, in particular such that the wavelength and/or duration of illumination and/or radiant flux in a first region of the first layer is different from the wavelength and/or duration of illumination in a second region of the first layer. It is conceivable that the wavelength and/or duration of illumination and/or radiant flux is adjusted in dependence of a lateral position, in particular such that there are regions within the first layer that are pinned with a higher energy as compared to other regions within the first layer. Thereby, it is conceivable that the amount of pin curing may be adjusted according to the lateral position within a layer, resulting in regions with a higher pin energy and regions with a lower pin energy within the same layer. This may be advantageous when the additional structures, formed by means of the one or more further droplets deposited on top of the first layer, should have different shapes depending on the lateral position.

According to an embodiment of the present invention, the one or more further droplets of printing ink are deposited on top of the first layer after at least partially curing the droplets of the first layer.

According to an embodiment of the present invention, by means of depositing the one or more further droplets of printing ink a second layer is formed. Thereby, an optical structure with several (sub-)layers may be obtained, wherein the shape of the droplets of a new layer may be controlled by means of the curing parameters of the previous layer.

According to an embodiment of the present invention, the droplets deposited in the second step for forming the first layer are made of the same ink as the one or more further droplets that are to be deposited on top of the first layer, in particular for forming the second layer. As such, the first and second layer may be sub-layers of a homogeneous optical structure. As an alternative, it is conceivable that the one or more further droplets (that are deposited on top of the first layer) are made of a different printing ink as compared to the droplets deposited in the second step for forming the first layer.

According to an embodiment of the present invention, the wavelength and/or duration of illumination and/or radiant flux is chosen and/or adjusted individually for the different layers, in particular for the first and second layer. It is possible that for each deposited layer of the optical structure, the desired curing energy and waiting time is calculated according to the preferred cured droplet shape of the next layer or next layers.

As such, it is conceivable according to an embodiment of the present invention that the wavelength and/or duration of illumination and/or radiant flux used for at least partially curing the second layer is different from the wavelength and/or duration of illumination and/or radiant flux used for at least partially curing the first layer. Thereby, a particularly high customizability of the shape and properties of the optical structure may be achieved.

According to an embodiment of the present invention, one or more additional droplets of printing ink are deposited on top of the second layer after at least partially curing the further droplets of the second layer, in particular for forming a third layer by means of the one or more additional droplets. In particular, it is conceivable that the wavelength and/or duration of illumination and/or radiant flux for at least partially curing the second layer and/or the further droplets of the second layer is chosen and/or adjusted according to further predetermined parameters, wherein the further predetermined parameters are determined based on a required and/or desired wettability of the one or more additional droplets of printing ink that are to be deposited on top of the second layer. As such, the further predetermined parameters preferably at least specify the wavelength and/or duration of illumination and/or radiant flux used for at least partially curing the deposited further droplets of the second layer. Said further predetermined parameters are preferably predetermined in that they are calculated in dependence of a required and/or desired wettability of the one or more additional droplets of printing ink that are to be deposited on top of the second layer. Thereby, the shape of the one or more additional droplets may be controlled in an advantageous manner. Controlling the shape of the droplets of the next to be deposited layer by means of choosing and/or adjusting the wavelength and/or duration of illumination and/or radiant flux when curing the respective underlying layer may further be repeated for some or all layers that are additionally deposited for forming the optical structure.

According to an embodiment of the present invention, the wavelength and/or duration of illumination and/or radiant flux used for at least partially curing the third layer is different from the wavelength and/or duration of illumination and/or radiant flux used for at least partially curing the first layer and/or the second layer.

According to an embodiment of the present invention, the shape of the deposited one or more further droplets is controlled by means of choosing and/or adjusting the volume of the one or more further droplets,
wherein the volume of the of the one or more further droplets is preferably adjusted by means of a printing head that ejects the one or more further droplets. As such, it is preferred to additionally influence the shape of a deposited further droplet by means of adjusting/choosing the volume of said further droplet during the printing process. The volume can be tuned by means of the printing head that ejects the further droplet.

In the context of the present invention, the shape of a structure, especially of a droplet, comprises (but is not limited to) a height, i.e., a vertical extension perpendicular to the area of the base structure, and a lateral width, i.e., a horizontal extension parallel to the area of the base structure. A person skilled in the art understands that the first layer, second layer, third layer and/or any additional layer may comprise substantially any outer contour and/or shape as desired. According to the present invention, it is advantageously possible that the first layer, second layer, third layer and/or any additional layer may comprise varying heights and/or different lateral widths in different orientations.

Furthermore, the present invention relates to an optical structure, in particular produced by a method according to an embodiment of the present invention,
wherein the optical structure comprises a first layer built by means of droplets of a printing ink being at least partially cured by illumination,
--- wherein the wavelength and/or duration of said illumination and/or radiant flux of said illumination and/or the temperature of the deposited droplets is chosen and/or adjusted for controlling the shape of one or more further droplets of printing ink that are to be deposited on top of the first layer;
   and/or
--- wherein the wavelength and/or duration of said illumination and/or radiant flux of said illumination and/or the temperature of the deposited droplets is chosen and/or adjusted according to predetermined parameters, wherein the predetermined parameters are determined based on a required and/or desired wettability of one or more further droplets of printing ink that are to be deposited on top of the first layer. Thereby, the shape of the one or more further droplets is controllable in an advantageous manner.

According to an embodiment of the present invention, especially of the inventive optical structure, the one or more further droplets of printing ink are deposited on top of the first layer,
preferably wherein the one or more further droplets of printing ink form a second layer at least partially on top of the first layer,
more preferably wherein the shape of the one or more further droplets of printing ink is dependent on the wavelength and/or duration of illumination and/or radiant flux and/or temperature used for at least partially curing the droplets of printing ink of the first layer. Therein, the optical structure preferably comprises a first layer and a second layer.

According to the present invention, it is conceivable that the shape of individual droplets, or a plurality of droplets within a (sub)layer is influenced by the wettability with previous layer(s). The wettability is amongst others influenced by the pinning energy of the previous layer. The less a previous layer is pinned, the more the top layer/droplets will wet. More wetting will lead to droplet(s) with an increased diameter/width and decreased height. As such, more wetting leads to flatter droplet(s). The pinning energy can be increased by longer exposition to UV light and/or by using a shorter wavelength. By controlling the amount of pinning energy, the resulting shape of droplet(s) of the next layer is controllable. Preferably, according to the present invention for each deposited droplet and/or layer, the desired curing energy and/or waiting time is calculated according to the preferred cured droplet shape of the next layer or layers. Said calculation may be carried out computer-implemented and automated.

According to an embodiment of the present invention, the optical structure comprises a coating layer, especially a functional layer. The coating layer, especially a functional layer, may be located on the outside of the optical structure. It is hence advantageously possible to protect the optical structure from chemical and/or mechanical deterioration.

The embodiments and advantages described above with respect to the method according to the present invention or with respect to an embodiment of the method according to the present invention are also applicable for the optical structure according to the present invention. The embodiments and advantages described above with respect to the optical structure according to the present invention or with respect to an embodiment of an optical structure according to the present invention are also applicable for the method according to the present invention.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

- **Figure 1**: shows an optical structure produced by means of a method according to an embodiment of the present invention;
- **Figure 2**: shows an optical structure produced by means of a method according to a further embodiment of the present invention.

### DETAILED DESCRIPTION

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated. Furthermore, the terms first, second, third and the like in the description and in the claims are used for distinguishing between similar elements and not necessarily for describing a sequential or chronological order.

It is to be understood that the terms so used are interchangeable under appropriate circumstances and that the embodiments of the invention described herein are capable of operation in other sequences than described or illustrated herein.

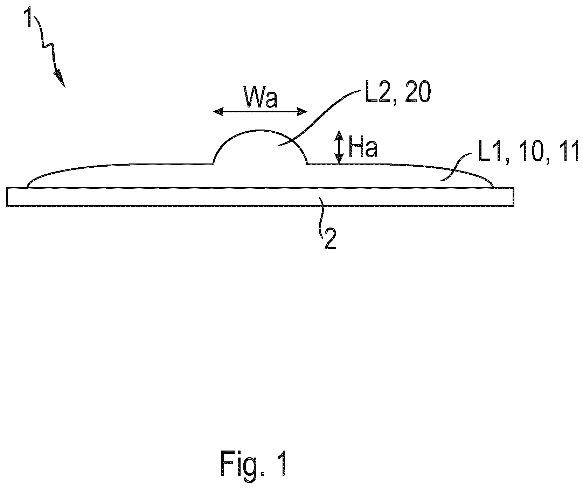

In **Fig. 1****,** an optical structure 1 produced by a method according to an embodiment of the present invention is schematically illustrated. On a base structure 2, in particular a substrate, a first layer L1 is printed. The first layer L1 is built by means of one or more droplets 10, 11 of printing ink. The first layer L1 is pin cured in an amount that a further droplet 20 of printing ink, which forms a second layer L2, wetting on the first layer L1 in a desired shape.

In particular, by means of choosing and/or adjusting the wavelength and/or duration of illumination and/or radiant flux for curing the droplets 10, 11 of the first layer L1 according to predetermined parameters, the shape of further droplets 20 of printing ink that are to be deposited on top of the first layer L1 can be controlled advantageously. As such, the shape of further droplets 20 of the second layer L2 can be influenced and/or defined by means of the curing process of the droplets 10, 11 of the first layer L1. The shape of the one or more further droplets 20 is influenced by the wettability of said one or more further droplets 20 on the first layer L1. The wettability is amongst others influenced by the pinning energy of the first layer L1. The less the first layer L1 is pinned, the more the one or more further droplets 20 will wet with the first layer L1, wherein more wetting leads to the one or more further droplets 20 having an increased diameter and/or width and a decreased height. The pinning energy of the first layer L1 can be increased by longer exposition to illumination, in particular UV light, and/or by using a shorter wavelength when curing the droplets 10, 11 of the first layer L1 by means of illumination. As such, by controlling the amount of pinning energy, the resulting shape of the one or more further droplets 20 is controllable. Therein, for the droplets 10, 11 of the first layer L1, the desired curing energy and/or waiting time of the illumination for curing said droplets 10, 11 is calculated according to the preferred cured droplet shape of the one or more further droplets 20 that are deposited on top of the first layer L1.

In the embodiment shown in Fig. 1, a comparably high pinning energy is applied to the first layer L1. Therefore, the further droplet 20 has a rather small width Wa and a rather great height Ha.

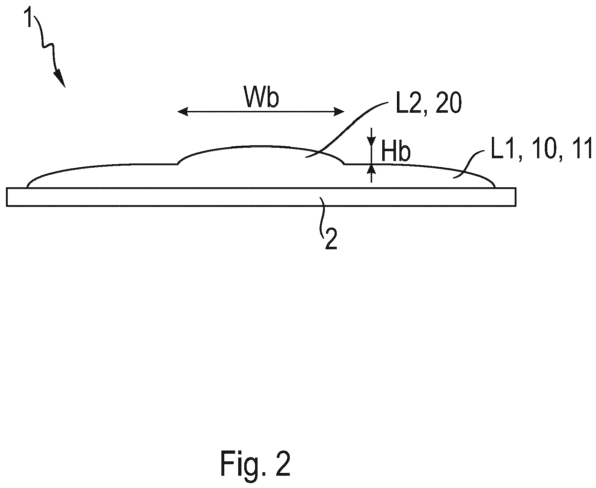

In **Fig. 2****,** an optical structure 1 produced by a method according to a further embodiment of the present invention is schematically illustrated. As compared to the embodiment shown in Fig. 1, a lower pinning energy is applied to the first layer L1. Therefore, in Fig. 2 the further droplet 20 (of the second layer L2) has a decreased height Hb and an increased width Wb as compared to the height Ha and width Wa of the embodiment shown in Fig. 1.

As such, the embodiments of Figures 1 and 2 may be realized by means of a method for producing an optical structure 1, comprising the steps of:
- providing the base structure 2,
- ejecting droplets 10, 11 of a printing ink comprising a partly or fully transparent material towards the base structure 2, and
- at least partially curing the deposited droplets by illumination,

wherein the droplets 10, 11 are preferably arranged side by side and one above the other partly overlapping each other to form a first layer L1, wherein in the step of at least partially curing the deposited droplets 10, 11, the wavelength and/or duration of illumination and/or radiant flux is chosen and/or adjusted according to predetermined parameters,
wherein the predetermined parameters are determined, in particular calculated, based on the required and/or desired wettability of yet to be deposited further droplets 20 on top of the deposited first layer L1. Thereby, the shape of the of the yet to be deposited further droplets 20 after depositing can be controlled, as the shape of said yet to be deposited further droplets 20 depends on the wetting of said yet to be deposited further droplets 20 with the first layer L1.

### REFERENCE SIGN LIST

- 1: optical structure
- 2: base structure
- 10, 11: droplets
- 20: further droplet
- Wa: width of the further droplet
- Ha: height of the further droplet
- Wb: width of the further droplet
- Hb: height of the further droplet
- L1: first layer
- L2: second layer

## Claims

1. Method for producing an optical structure (1), in particular an optical lens,
wherein the method comprises the following steps:
- in a first step, a base structure (2) is provided;
- in a second step, after the first step, droplets (10, 11) of a printing ink are deposited onto the base structure (2), wherein the droplets (10, 11) are arranged to form a first layer (L1);
- in a third step, during and/or after the second step, the deposited droplets (10, 11) are at least partially cured by illumination,
**characterized in that** - in the third step -:
--- the wavelength and/or duration of illumination and/or radiant flux and/or the temperature is chosen and/or adjusted for controlling the shape of one or more further droplets (20) of printing ink that are to be deposited on top of the first layer (L1);
and/or
--- the wavelength and/or duration of illumination and/or radiant flux and/or the temperature is chosen and/or adjusted according to predetermined parameters, wherein the predetermined parameters are determined based on a required and/or desired shape and/or amount of wetting of one or more further droplets (20) of printing ink that are to be deposited on top of the first layer (L1).

2. Method according to claim 1, wherein - in the third step - the wavelength and/or duration of illumination and/or radiant flux and/or temperature is chosen and/or adjusted individually for droplets (10, 11) deposited in the second step or individually for sets of droplets (10, 11) deposited in the second step.

3. Method according to one of the preceding claims, wherein the wavelength and/or duration of illumination and/or radiant flux is varied in dependence of a lateral position, in particular such that the wavelength and/or duration of illumination and/or radiant flux in a first region of the first layer (L1) is different from the wavelength and/or duration of illumination and/or radiant flux in a second region of the first layer (L1).

4. Method according to one of the preceding claims, wherein the one or more further droplets (20) of printing ink are deposited on top of the first layer (L1) after at least partially curing the droplets (10, 11) of the first layer (L1).

5. Method according to claim 4, wherein by means of depositing the one or more further droplets (20) of printing ink a second layer (L2) is formed.

6. Method according to one of the preceding claims, wherein the droplets (10, 11) deposited in the second step for forming the first layer (L1) are made of the same ink as the one or more further droplets (20) that are to be deposited on top of the first layer (L1), in particular for forming the second layer (L2).

7. Method according to one of the preceding claims, wherein the wavelength and/or duration of illumination and/or radiant flux is chosen and/or adjusted individually for the different layers (L1, L2), in particular for the first and second layer (L1, L2).

8. Method according to one of the preceding claims, wherein the wavelength and/or duration of illumination and/or radiant flux used for at least partially curing the second layer (L2) is different from the wavelength and/or duration of illumination and/or radiant flux used for at least partially curing the first layer (L1).

9. Method according to one of the preceding claims, wherein one or more additional droplets of printing ink are deposited on top of the second layer (L2) after at least partially curing the further droplets (20) of the second layer (L2), in particular for forming a third layer by means of the one or more additional droplets.

10. Method according to claim 9, wherein the wavelength and/or duration of illumination and/or radiant flux used for at least partially curing the third layer is different from the wavelength and/or duration of illumination and/or radiant flux used for at least partially curing the first layer (L1) and/or the second layer (L2).

11. Method according to one of the preceding claims, wherein the shape of the deposited one or more further droplets (20) is controlled by means of choosing and/or adjusting the volume of the one or more further droplets (20),
wherein the volume of the of the one or more further droplets (20) is preferably adjusted by means of a printing head that ejects the one or more further droplets (20).

12. Optical structure (1), in particular produced by a method according to any one of the preceding claims,
wherein the optical structure (1) comprises a first layer (L1) built by means of droplets (10, 11) of a printing ink being at least partially cured by illumination,
--- wherein the wavelength and/or duration of said illumination and/or radiant flux of said illumination and/or the temperature of the deposited droplets is chosen and/or adjusted for controlling the shape of one or more further droplets (20) of printing ink that are to be deposited on top of the first layer (L1);
and/or
--- wherein the wavelength and/or duration of said illumination and/or radiant flux of said illumination and/or the temperature of the deposited droplets is chosen and/or adjusted according to predetermined parameters, wherein the predetermined parameters are determined based on a required and/or desired wettability of one or more further droplets (20) of printing ink that are to be deposited on top of the first layer (L1).

13. Optical structure (1) according to claim 12, wherein the one or more further droplets (20) of printing ink are deposited on top of the first layer (L1),
preferably wherein the one or more further droplets (20) of printing ink form a second layer (L2) at least partially on top of the first layer (L1),
more preferably wherein the shape of the one or more further droplets (20) of printing ink is dependent on the wavelength and/or duration of illumination and/or radiant flux and/or the temperature used for at least partially curing the droplets (10, 11) of printing ink of the first layer (L1).
